# EUROPEAN PATENT APPLICATION

(11) **EP 2 048 855 A2**
(43) Date of publication of application: **15.04.2009**
(21) Application number: 08152322.7
(22) Date of filing: 05.03.2008
(51) Int. Cl.: H04L 29/08

(54) **Information transmitting system, information processing apparatus, information managing apparatus, and information transmitting method**

(30) Priority: 19.03.2007 JP 2007071510
(71) Applicant: Ricoh Company, Ltd., Tokyo 143-8555 (JP)
(72) Inventor: Emori, Mototsugu, Tokyo 143-8555 (JP)
(74) Representative: Schwabe - Sandmair - Marx

(57) **Abstract**

An information transmitting system includes a plurality of peers. A peer (1B) transmits to a peer (1A) a request to notify the peer (1B) of updating of data to obtain by meta-data of the data. Upon receipt of the meta-data transmitted in response to the request, the peer (1B) obtains the data corresponding to the meta-data. The peer (1A) generates meta-data of the data. The peer (1A) also generates update meta-data when the data is updated, and transmits the update meta-data to the peer (1B).

## Description

### CROSS-REFERENCE TO RELATED APPLICATIONS

The present application claims priority to and incorporates by reference the entire contents of Japanese priority document 2007-071510 filed in Japan on March 19, 2007.

### BACKGROUND OF THE INVENTION

### 1. Field of the Invention

The present invention relates to a technology for peer-to-peer data transmission.

### 2. Description of the Related Art

Peer-to-peer (hereinafter, "P2P") systems have been used for data transmission. For example, Japanese Patent Application Laid-Open No. 2006-178752 discloses a conventional P2P system associated with transmission of a function stored in a function server 14 and added to an application. In this P2P system, functions are stored in the function server, and function meta-information for each function is stored in a function repository server. One of peers forming a group accesses the function repository server to obtain and publish function meta-information for a desired function. When an arbitrary peer in the group accesses the function server and obtains a function based on this function meta-information, the obtained function is published within the peer group. With this, other peers can efficiently obtain function without accessing the function server, which improves network load distribution.

Japanese Patent Application Laid-Open No. 2006-178751 discloses another conventional P2P system in which, when any one of printers updates and publishes Read-Only-Memory (ROM) data, it is determined from status information of the printer updating the ROM data whether there is a possibility that data usable by its own device is included. When data usable by its own device is included, the published ROM data is obtained, and is compared with ROM data of its own device in consideration of device information of its own device, thereby selecting data usable by its own device. When data usable by its own device is selected, the data is installed in a ROM. With this, by installing firmware or a resource in any of the printers, the data is automatically installed in other printers that can use the data.

Japanese Patent Application Laid-Open No. 2006-178749 discloses still another conventional P2P system, in which peers are connected to one another, and at least part of the peers can transmit and receive data without the intermediary of a specific server.

In the conventional P2P system disclosed in Japanese Patent Application Laid-Open No. 2006-178752, information for transmission, such as a function to be added to the application, is shared in the P2P system, thereby preventing access concentration on a specific server, such as a function server. However, for information publication, such a specific server is required. Moreover, in this P2P system, when information is updated, such update may not possibly be immediately reflected on the peers within the P2P system.

In the conventional P2P system disclosed in Japanese Patent Application Laid-Open No. 2006-178751, when information, such as ROM data, is published, the information is reported in the P2P system, and is installed in any applicable printers. However, when the information is updated, a message indicating as such is multicast, thereby reporting to the peers within the P2P system. This may possibly lead to an increase in network traffic if the type and number of information is increased.

In the conventional P2P system disclosed in Japanese Patent Application Laid-Open No. 2006-178749, part of the peers can transmit and receive information without the intermediary of a specific server, whilst an information publication report is assumed to be multicast. Therefore, as explained above, this may possibly lead to an increase in network traffic if the type and number of information is increased. Also in this P2P system, when information is updated, such update may not possibly be immediately reflected on the peers within the P2P system, thereby making it difficult to obtain the latest information.

### SUMMARY OF THE INVENTION

It is an object of the present invention to at least partially solve the problems in the conventional technology.

According to an aspect of the present invention, there is provided an information transmitting system including a plurality of information processing apparatuses, in which a first information processing apparatus transmits information to a second information processing apparatus via a network. The information transmitting system includes a selecting unit that selects, from the information processing apparatuses, at least one information managing apparatus that manages meta-data representing attributes of information; and a position-information transmitting unit that transmits position information of the information managing apparatus to the information processing apparatuses. The second information processing apparatus includes a requesting unit that transmits a request to the information managing apparatus to transmit meta-data representing attributes of information to obtain when the information is updated; a meta-data receiving unit that receives the meta-data from the information managing apparatus; and an obtaining unit that obtains the information based on the meta-data. The information managing apparatus includes a meta-data receiving unit that receives the meta-data from the first information processing apparatus; a storage unit that stores therein the meta-data; a managing unit that manages the meta-data stored in the storage unit; a request receiving unit that receives the request from the requesting unit; and a meta-data transmitting unit that transmits the meta-data to the second information processing apparatus when the managing unit determines that the meta-data has been updated. The first information processing apparatus includes an information storage unit that stores therein the information; a generating unit that generates, when information is newly stored in the information storage unit or when the information stored in the information storage unit is updated, meta-data of the information; and a meta-data transmitting unit that transmits the meta-data generated by the generating unit to the information managing apparatus.

According to another aspect of the present invention, there is provided an information processing apparatus that transmits information to another information processing apparatus via a network. The information processing apparatus includes a storage unit that stores therein information to be transmitted to another information processing apparatus; a request receiving unit that receives a request to transmit meta-data representing attributes of the information when the information is updated; a generating unit that generates, when information is newly stored in the storage unit or when the information stored in the storage unit is updated, meta-data of the information; a managing unit that manages the meta-data generated by the generating unit; and a meta-data transmitting unit that transmits the meta-data to the other information processing apparatus when the managing unit determines that the meta-data has been updated.

According to still another aspect of the present invention, there is provided an information managing apparatus that is connected to a network and manages meta-data representing attributes of information to be transmitted from a first information processing apparatus to a second information processing apparatus. The information managing apparatus includes a meta-data receiving unit that receives the meta-data from the first information processing apparatus; a storage unit that stores therein the meta-data; a managing unit that manages the meta-data stored in the storage unit; a request receiving unit that receives from the second information processing apparatus a request to transmit the meta-data when the information is updated; and a meta-data transmitting unit that transmits the meta-data to the second information processing apparatus when the managing unit determines that the meta-data has been updated.

According to still another aspect of the present invention, there is provided an information transmitting method applied to an information transmitting system including a plurality of information processing apparatuses in which a first information processing apparatus transmits information to a second information processing apparatus via a network. The information transmitting method includes selecting, from the information processing apparatuses, at least one information managing apparatus that manages meta-data representing attributes of information; transmitting position information of the information managing apparatus to the information processing apparatuses; the second information processing apparatus transmitting a request to the information managing apparatus to transmit meta-data representing attributes of information to obtain when the information is updated; the second information processing apparatus receiving the meta-data from the information managing apparatus; the second information processing apparatus obtaining the information based on the meta-data; the information managing apparatus receiving the meta-data from the first information processing apparatus; the information managing apparatus storing the meta-data in a storage unit; the information managing apparatus receiving the request from the second information processing apparatus; the information managing apparatus transmitting the meta-data to the second information processing apparatus when the meta-data has been updated; the first information processing apparatus storing the information in an information storage unit; the first information processing apparatus generating, when information is newly stored in the information storage unit or when the information stored in the information storage unit is updated, meta-data of the information; and the first information processing apparatus transmitting the meta-data generated to the information managing apparatus.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

Fig. 1 is a schematic diagram of a P2P network that constitutes an information transmitting system according to a first embodiment of the present invention;
Fig. 2 is a functional block diagram of peers shown in Fig. 1;
Fig. 3 is an example of a data structure of meta-data according to the first embodiment;
Fig. 4 is a flowchart of a data searching and obtaining process performed by a peer shown in Fig. 1;
Fig. 5 is a schematic diagram of a P2P network that constitutes an information transmitting system according to a second embodiment of the present invention;
Fig. 6 is a functional block diagram of peers and a data-management server shown in Fig. 5;
Fig. 7 is a flowchart of the operation of the data-management server in the data searching and obtaining process;
Fig. 8 is a flowchart of a data/meta-data generating process performed by a peer according to the second embodiment;
Fig. 9 is a schematic diagram for conceptually explaining a flow of data when peers transmit a meta-data subscription request including specifying information for the same data;
Fig. 10 is a schematic diagram for conceptually explaining a flow of data when part of attributes included in meta-data are updated;
Fig. 11 is a schematic diagram of a P2P network that constitutes an information transmitting system according to a third embodiment of the present invention; and
Fig. 12 is a functional block diagram of peers and a data-management peer shown in Fig. 11.

### DETAILED DESCRIPTION OF THE PREFERRED EMBODIMENTS

Exemplary embodiments of the present invention are explained in detail below with reference to the accompanying drawings.

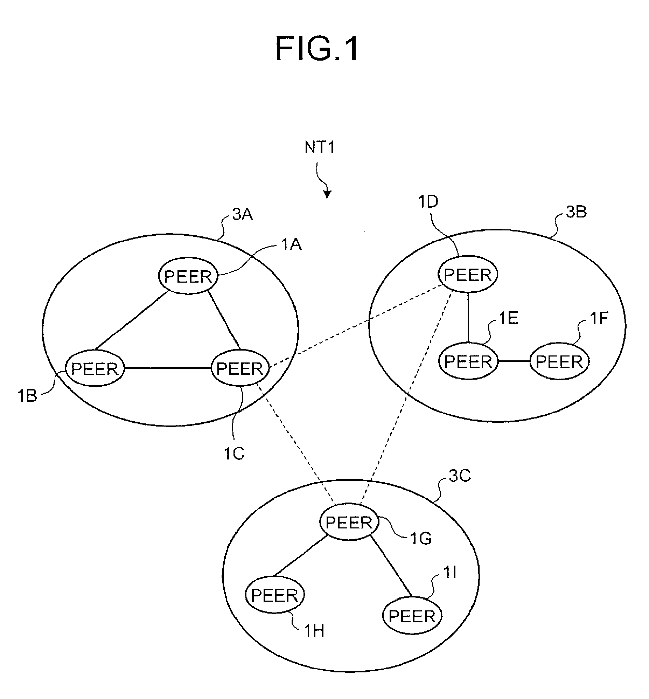

Fig. 1 is a schematic diagram of a P2P network NT1 that constitutes an information transmitting system according to a first embodiment of the present invention. The P2P network NT1 forms a P2P system including peers 1A to 1I connected with one another. The peers 1A to 1I represent information processing apparatuses. That is, the P2P network NT1 constitutes a P2P system that includes information processing apparatuses as peers. Each of the peers 1A to 1I can be under access restriction by a firewall, or can be address-converted by a network address translator (NAT). Also, Transmission Control Protocol (TCP) using IPv4 and IPv6, User Datagram Protocol (UDP), HyperText Transfer Protocol (HTTP), extensible Messaging and Presence Protocol (XMPP), Session Initiation Protocol (SIP), or the like can be used as a scheme of connection among peers. To the basic configuration and operation principles of the P2P system, any known configuration and method can be applied. In the following, therefore, the basic configuration and operation of the P2P system are schematically explained.

The peers 1A to 1I each include a control device such as a central processing unit (CPU), a storage device such as a read only memory (ROM) and random access memory (RAM), an external storage device such as a hard disk drive (HDD) and a compact disk (CD) drive device, a display device, an input device such as a keyboard and a mouse, and a communication interface (I/F), which are connected by a bus (all not shown), having a hardware configuration of a general personal computer. In the external storage device, various data and various computer programs are stored.

For example, the peers 1A to 1I are explained herein as personal computers. However, the peers 1A to 1I can be network-connectable hardware, such as Personal Digital Assistants (PDAs), cellular phones, telephones, facsimile machines, printers, copiers, and multifunction products (MFPs) that combines any or all of functions of a printer, a copier, a scanner, and a facsimile machine. The peers 1A to 1I can also be software implementing these functions. In the following, when the peers 1A to 1I are not required to be distinguished from one another, letters "A" to "I" are omitted for explanation.

It is assumed herein that the P2P network NT1 is a pure P2P network without a server, and the peer 1A has a server function instead.

In the P2P network NT1, a group (hereinafter, "peer group") is formed for each of the plurality of peers 1. In Fig. 1, a peer group 3A is formed for the peers 1A to 1C, a peer group 3B is formed for the peers 1D to 1F, and a peer group 3C is formed for the peers 1G to 1I. In the following, when the peer groups 3A to 3C are not required to be distinguished from one another, characters "A" to "C" are omitted for explanation. Each of these peer groups 3 is formed of, for example, users having the same objective and task or peers 1 used by the users. The peer group 3 can be arbitrarily formed among the plurality of peers 1 and also can be arbitrarily dissolved. In the P2P network NT1, each of the peers 1A to 1I belongs to at least one of the peer groups 3A to 3C. Each of the peers 1A to 1I can belong to only one of the peer groups 3A to 3C, or can belong to any plurality of the peer groups 3A to 3C.

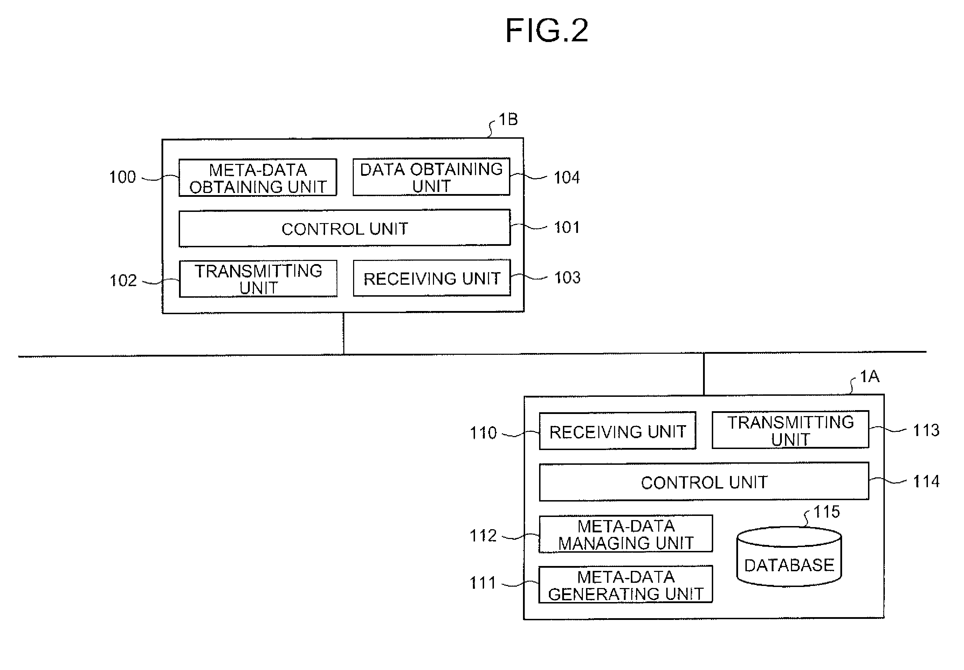

Described below is functions of the peer 1, which is implemented by the CPU of the peer 1 executing a computer program stored in the ROM. Fig. 2 is a functional block diagram of the peers 1. The peers 1B to 1I are of like configuration and thus but one of them, for example, the peer 1B, is described along with the peer 1A. The peer 1B includes a meta-data obtaining unit 100, a control unit 101, a transmitting unit 102, a receiving unit 103, and a data obtaining unit 104. The transmitting unit 102 transmits a meta-data subscription request for reporting to the peer 1A update by meta data of data to be transmitted. The receiving unit 103 receives the data to be transmitted and meta-data, which will be explained further below. The meta-data obtaining unit 100 obtains via the receiving unit 103 the meta-data transmitted in response to the meta-data subscription request. The data obtaining unit 104 obtains via the receiving unit 103 the data to be transmitted corresponding to the meta-data. The control unit 101 provides various services in the P2P network NT1, such as a data sharing service or a search service.

On the other hand, the peer 1A includes a receiving unit 110, a meta-data generating unit 111, a meta-data managing unit 112, a transmitting unit 113, a control unit 114, and a database 115. The database 115 is formed, for example, in the external storage device, and stores therein data to be transmitted. The receiving unit 110 receives a search request and a meta-data subscription request transmitted from other peers 1. The meta-data generating unit 111 generates meta-data for data to be transmitted in the database 115. The meta-data generating unit 111 also generates meta-data for data to be transmitted in the database 115 every time the data is updated.

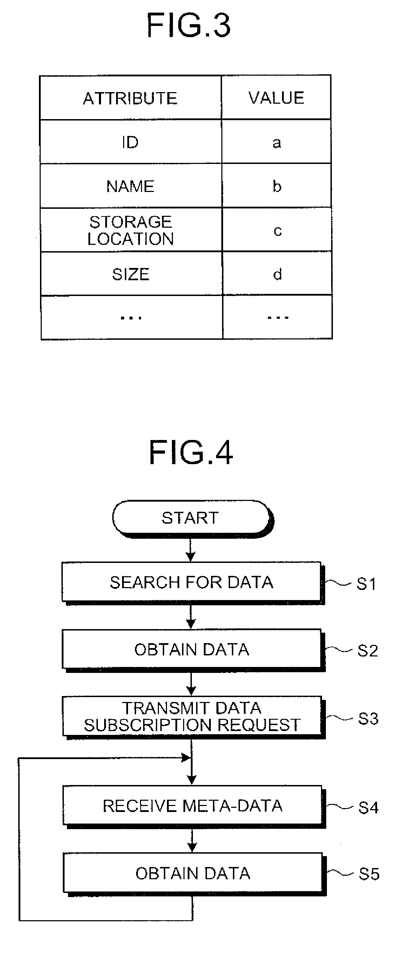

Fig. 3 is an example of a data structure of the meta-data. The meta-data represents various attributes of data to be transmitted Examples of attributes include identifier (ID), name, type, storage location, size, generation date and time, update date and time, use state, generator, administrator (manager), category, keyword, summary, comment, version, revision number, access right to related information, disclosure range, state, compatibility, and reference to related information. Fig. 3 depicts, as meta-data, a value for each attribute: "ID", "name", "storage location", and "size".

The meta-data managing unit 112 manages the meta-data generated by the meta-data generating unit 111. The transmitting unit 113 transmits the meta-data generated by the meta-data generating unit 111 in association with update of the data to be transmitted, to the other peer 1 that transmitted the meta-data subscription request. The control unit 114 provides various services in the P2P network NT1, such as a data sharing service and a search service.

For example, upon receipt via the receiving unit 110 of a search request transmitted from another peer 1 (hereinafter, "search-requesting peer"), the control unit 114 searches whether the relevant data is stored in the database 115, and then transmits a search result to the search-requesting peer via the transmitting unit 113. Also, upon receipt via the receiving unit 110 of a data obtaining request transmitted from the search-requesting peer, the control unit 114 obtains the relevant data stored in the database 115 in response to the data obtaining request, and then transmits the relevant data to the search-requesting peer via the transmitting unit 113. The control unit 114 updates the data stored in the database 115 as appropriate, and requests the meta-data generating unit 111 to generate meta-data for the updated data.

Fig. 4 is a flowchart of a data searching and obtaining process performed by the peer 1. It is assumed herein for explanation that the peer 1B is a search-requesting peer that requests a data search.

The peer 1B searches the P2P network NT1 for data desired by the user or data specified in advance (step S1). Specifically, the peer 1B transmits a search request for a data search to an adjacent peer 1 (for example, the peer 1C) in the P2P network NT1 and, if the peer 1 that have received the search request holds the relevant data, the peer 1 returns a search result to notify the peer 1B of this. If the peer 1 that have received the search request does not hold the relevant data, the search request is further transferred to an adjacent peer 1 (for example, any one of the peers 1D to 1F and the peer 1G to 1I) in the P2P network NT1. In this manner, a data search in the P2P network NT1 is performed, and the peer 1B obtains from the other peers 1 search results indicating the presence or absence of the relevant data. The peer 1A then selects the desired data from the search results. It is assumed herein that the selected data is held in the peer 1A. The peer 1B requests the peer 1A to transmit the relevant data. The peer 1B then obtains the data transmitted in response to the request from the peer 1A (step S2). The process at steps S1 and S2 can be achieved by using a conventional P2P system.

The peer 1B then transmits a meta-data subscription request for the relevant data to keep the data obtained at step S2 updated (step S3). On the other hand, if the data is updated, the peer 1A that has received the meta-data subscription request generates meta data for the update data, and then transmits the meta-data to the peer 1B. Upon receipt of the meta-data (step S4), the peer 1B requests the peer 1A to transmit the data corresponding to the meta-data, and then obtains the data from the peer 1A in response to the request (step S5).

As described above, according to the first embodiment, at the time of updating data to be transmitted, meta-data for the data is generated, and is transmitted to a peer that has issued a meta-data subscription request. With this, an increase in communication amount in the P2P network NT1 can be suppressed, which suppresses an increase in load on network traffic. Also, with a peer having a server function, a P2P network can be configured without a specific server. Thus, the configuration of the entire P2P network can be simplified.

Furthermore, since meta-data can be constructed by using basic attributes of the information, it is easy to interpret the meta-data and manage the information.

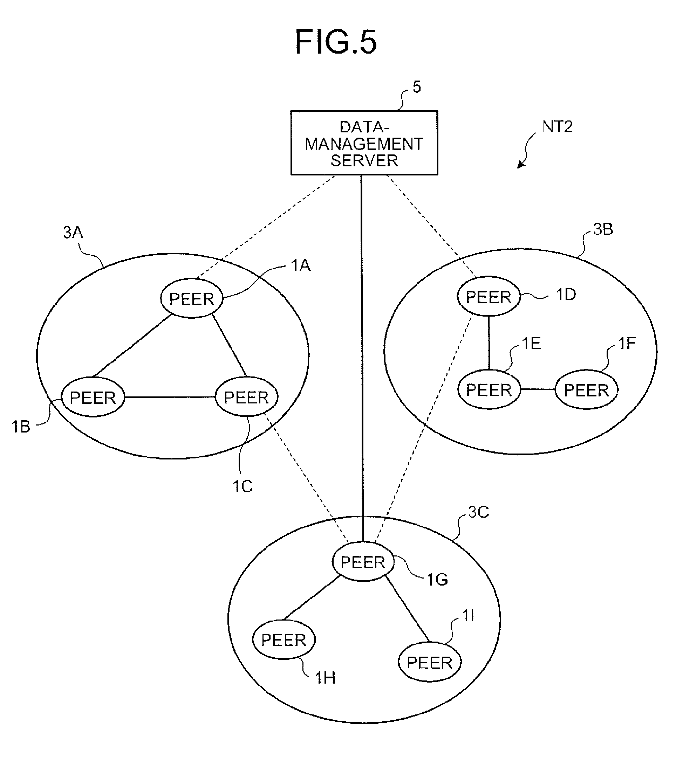

Fig. 5 is a schematic diagram of a P2P network NT2 that constitutes an information transmitting system according to a second embodiment of the present invention. Like reference numerals refer to constituents corresponding to those previously described in the first embodiment, and the same explanation is not repeated.

The P2P network NT2 is different from the P2P network NT1 in that the P2P network NT2 is in a hybrid P2P network to which is connected a data-management server 5 that manages data held by the peers 1. The data-management server 5 has a function of the meta-data managing unit 112 included in the peer 1A of the first embodiment.

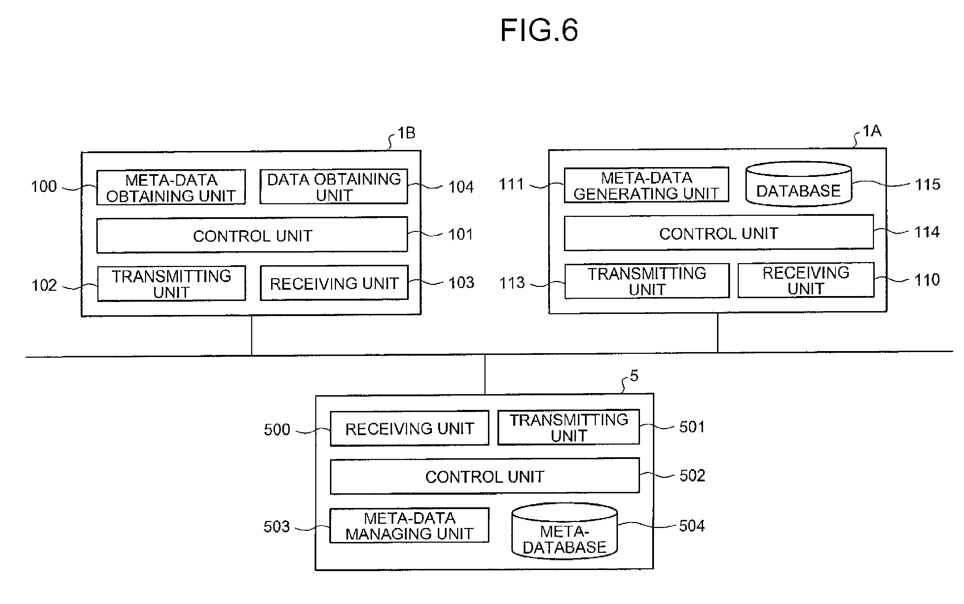

Fig. 6 is a functional block diagram of the data-management server 5 and the peers 1A and 1B of the second embodiment. The peer 1B is of basically the same configuration and operates in the same manner as that of the first embodiment. The peers 1C to 1I are similar to the peer 1B. The control unit 101 of the peers 1B to 1I transmits to the data-management server 5 a search request for data desired by the user or data specified in advance. The control unit 101 then receives from the data-management server 5 a search result in response to the search request.

The peer 1A of the second embodiment does not include the meta-data managing unit 112 differently from that of the first embodiment. When data to be distributed is newly generated, the meta-data generating unit 111 newly generates meta-data for that data. The transmitting unit 113 transmits to the data-management server 5 the meta-data newly generated by the meta-data generating unit 111. Also, when the data stored in the database 115 is updated, the meta-data generating unit 111 updates the meta-data. When the data stored in the database 115 is updated by the meta-data generating unit 111, the control unit 114 transmits the meta-data updated by the meta-data generating unit 111 to the data-management server 5 via the transmitting unit 113 if the data is publishable. Here, the data stored in the database 115 is associated with a publication flag indicative of whether the data is to be published, for example. By referring to this publication flag, the control unit 114 determines whether the data is publishable. The control unit 114 includes position information of the peer 1A and a data disclosure condition in the meta-data, and the transmitting unit 113 transmits the meta-data to the data-management server 5. The position information is, for example, an Internet Protocol (IP) address. The data disclosure condition is a condition regarding a data-transmission target. Specifically, the data disclosure condition specifies, from among the target peers 1 and peer groups 3, a peer 1 for which data transmission is enabled, a peer 1 for which data transmission is disabled, a peer group for which data transmission is enabled, or a peer group for which data transmission is disabled. This data disclosure condition is set in advance by the user. The control unit 114 transmits a delete instruction message for instruction of deletion to the data-management server 5 via the transmitting unit 113 when the meta-data already transmitted to the data-management server 5 is deleted. In response to this delete instruction message, the meta-data is deleted from the data-management server 5.

The data-management server 5 includes a receiving unit 500, a transmitting unit 501, a control unit 502, a meta-data managing unit 503, and a meta-database 504. The receiving unit 500 receives a search request and a meta-data subscription request transmitted from other peers 1, and also receives meta-data transmitted from the peer 1A. The transmitting unit 501 transmits, in response to a meta-data subscription request, meta-data updated in association with update of data to be transmitted, to another peer 1 transmitting the meta-data subscription request. The meta-database 504 stores the meta-data received by the receiving unit 500. The control unit 502 provides various services in the P2P network NT1, such as a data sharing service and a search service. For example, upon receipt of a search request from any one of the peers 1B to 1I (here, it is referred to as a search-requesting peer), the control unit 502 searches for the relevant data by using the meta-data stored in the meta-database 504. The meta-data managing unit 503 manages the meta-data stored in the meta-database 504. For example, upon receipt of meta-data transmitted from the peer 1A via the receiving unit 500, the meta-data managing unit 503 updates the meta-data stored in the meta-database 504. Also, when meta-data of the data that matches a search request includes a data disclosure condition, the meta-data managing unit 503 determines whether the search-requesting peer satisfies the data disclosure condition and, when the determination result is positive, determines that the meta-data is transmitted as being included in the search result, thereby causing the transmitting unit 501 to transmit the search result to the peer 1B.

A data disclosure condition different from the data disclosure condition explained above is set to the meta-data. This is set by a network administrator, for example. It is assumed herein that, to distinguish the data disclosure condition included in the meta-data from the data disclosure condition set by the network administrator, the former is referred to as a data disclosure condition 1, whilst the latter as a data disclosure condition 2. For example, the data disclosure condition 2 is a condition such that data relevant to meta-data including an attribute "category" set with a value indicative of "confidential" is allowed to be disclosed to any of the peer groups 3A to 3C that is set in advance as an employee group. In this manner, even when the data disclosure condition 1 is not set by the user, a data disclosure condition can be appropriately set by setting the data disclosure condition 2, thereby appropriately restricting a data disclosure range. Such data disclosure condition 2 is stored in the meta-database 504, for example. The meta-data managing unit 503 accesses the meta-database 504 to determine whether the search-requesting peer satisfies the data disclosure condition set to the meta data to be processed when such the data disclose condition is set and, when the determination result is positive, causes the meta-data to be transmitted to the search-requiring peer as being included in the search result.

Also, when the receiving unit 500 receives a delete instruction message transmitted from the peer 1A, the meta-data managing unit 503 deletes the meta-data stored in the meta-database 504 in response to the delete message.

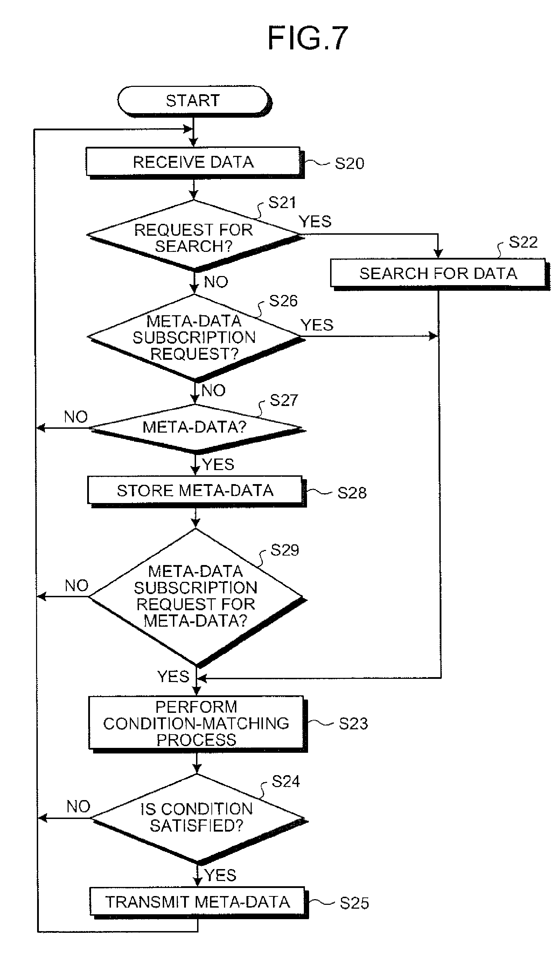

Fig. 7 is a flowchart of the operation of the data-management server 5 in the data searching and obtaining process performed by the peer 1. It is assumed herein for explanation that the peer 1B is a search-requesting peer that requests a data search.

At step S1 in Fig. 4, the peer 1B transmits to the data-management server 5 a search request for searching for data desired by the user or data specified in advance.

In Fig. 7, upon receipt of the search request (step S20 and Yes at step S21), the data-management server 5 searches for the relevant data by using the meta-data stored in the meta-database 504 (step S22). Upon detecting the meta-data for the relevant data, the data-management server 5 performs a condition-matching process in a manner as explained above (step S23). In the condition-matching process, when the disclosure condition 1 is included in the meta-data or the disclosure condition 2 is set to the meta-data, the data-management server 5 determines whether the peer 1B satisfies the data disclosure condition 1 or the data disclosure condition 2 (step S24). When the determination result is positive (Yes at step S24), the meta-data is transmitted as being included in the search result to the peer 1B (step S25).

Referring back to Fig. 4, upon receipt of the search result transmitted from the data-management server 5, the peer 1B selects desired data from the search result. It is assumed herein that the selected data is held in the peer 1A. The peer 1B requests the peer 1A to transmit the relevant data. The peer 1B then obtains the data transmitted in response to the request from the peer 1A (step S2). To keep the data obtained at step S2 updated, the peer 1B then transmits a meta-data subscription request of the data to the data-management server 5 (step S3).

Upon receipt of the meta-data subscription request (Yes at step S26), the data-management server 5 monitors the update state of the meta-data for the data stored in the meta-database 504. When the meta-data is updated, the data-management server 5 then performs the condition-matching process at step S23 in a manner as explained above. The meta-data stored in the meta-database 504 is updated, as explained below, by updating meta-data updated by the peer 1A and transmitted therefrom in the meta-database 504. When the determination result in the condition-matching process is positive (step S24), the data-management server 5 transmits the meta-data to the peer 1B (step S25).

Referring back to Fig. 4, upon receipt of the meta-data (step S4), the peer 1B requests the peer 1A to transmit data correspond to the meta-data, and obtains the data from the peer 1A in response to the request (step S5). A file server can additionally be provided that stores data to be distributed in the P2P network NT2, so that the peer 1B can obtain the relevant data from the file server. Furthermore, the relevant data can be stored in advance in the peer 1B.

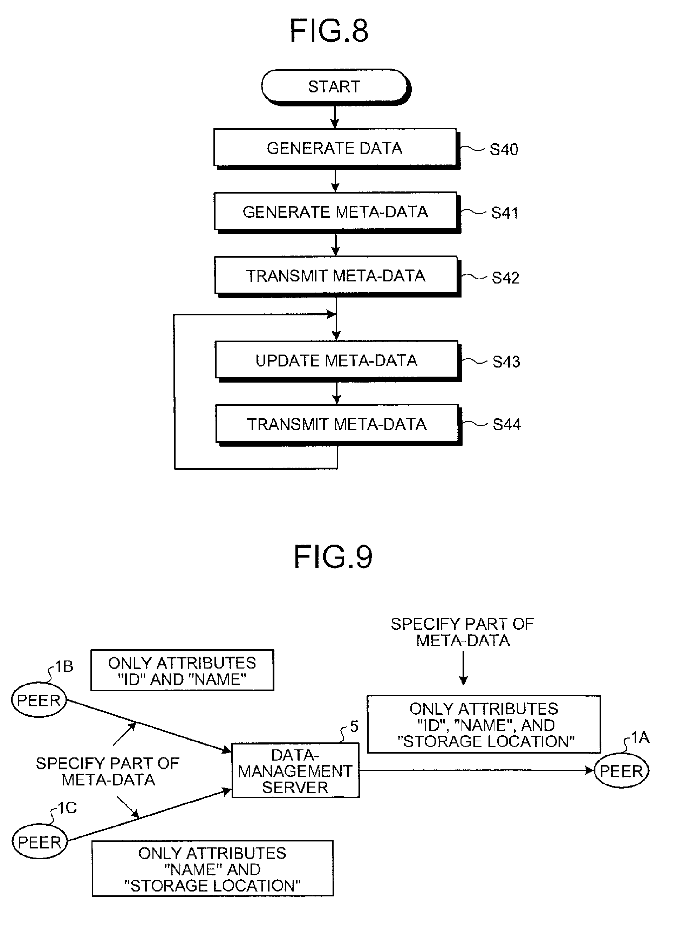

Fig. 8 is a flowchart of a data/meta-data generating process performed by the peer 1A. After generating data to be transmitted and storing the data in the database 115 (step S40), the peer 1A generates meta-data for the data (step S41), and then transmits the meta-data to the data-management server 5 (step S42). When the data stored in the database 115 is updated, the peer 1A updates the meta-data for the data (step S43), and transmits the meta-data to the data-management server 5 (step S44).

Referring back to Fig. 7, upon receipt of the meta-data transmitted from the peer 1A (Yes at step S27), the data-management server 5 stores the meta-data in the meta-database 504. The data-management server 5 then determines whether a meta-data subscription request is present for the meta-data (step S29). When the determination result is positive (Yes at step S29), the process control goes to step S23.

As explained above, according to the second embodiment, meta-data can be managed at the data-management server 5 in a centralized manner, and the latest data for data to be transmitted can be efficiently transmitted to the peer 1.

Because the data-management server 5 can search for relevant data by searching for the meta-data, the peer 1 is not required to previously store a storage location of the data and the meta-data for the data.

Moreover, an information processing apparatus holding data or a network administrator can determine a data disclosure range in advance and can set a data disclosure condition in advance. Therefore, data confidentiality can be ensured.

Upon receipt of meta-data for data from generating peers that hold the same data, the data-management server 5 analyzes the meta-data and determines which is the latest. Specifically, it is determined whether data held by a generating peer is newer than the data held by another one of generating peers in consideration of attributes included in meta-data, such as version, revision number, and updating date and time. Based on determination result, the data-management server 5 transmits the meta-data received from the generating peer to the other generating peer.

Furthermore, it is possible to report only when the version of data to be transmitted is updated. It is also possible for the user to freely set a data update criterion.

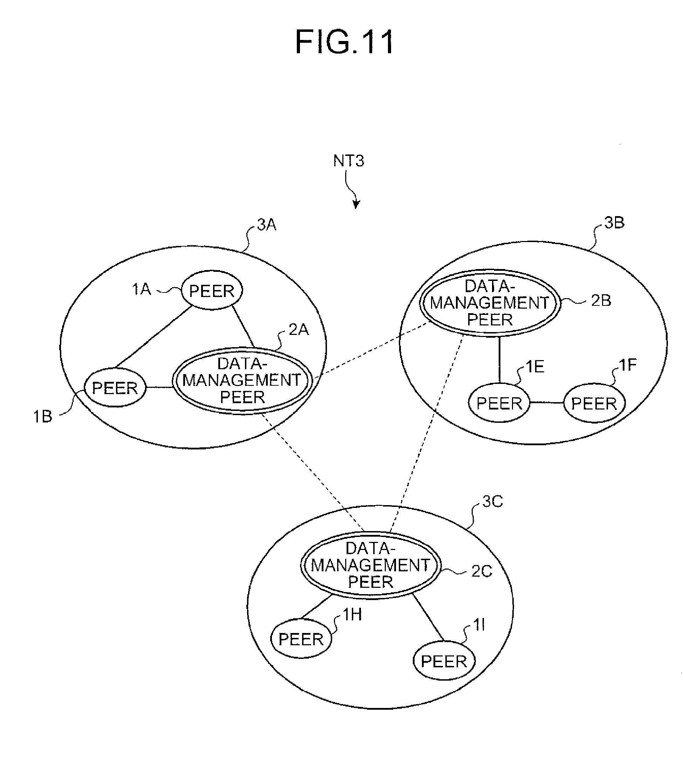

Fig. 11 is a schematic diagram of a P2P network NT3 that constitutes an information transmitting system according to a third embodiment of the present invention. Like reference numerals refer to constituents corresponding to those previously described in the first and second embodiments, and the same explanation is not repeated.

The P2P network NT3 is different from the P2P network NT1 and the P2P network NT2 in that the P2P network NT3 is a pure P2P network including a plurality of special peers (hereinafter, "data-management peers") that manage data held by other peers. These data-management peers behave as a single information server. The data-management peers may be referred to as supernodes. For example, in the P2P network NT3, a selecting unit (not shown) is further provided, and this selecting unit selects data-management peers from among peers. Each of the selected data-management peers manages data held by peers within its management range. A method of selecting data-management peers, a method of determining a responsible range of each of the data-management peers, and a method of reporting a position information of the data-management peer are similar to those in the existing super-node P2P network. For example, in the P2P network NT3, a position-information transmitting unit (not shown) is further provided, and that position-information transmitting unit transmits a position information list representing position information of data-management peers 2 to the peers 1 connected to the P2P network NT3, thereby reporting the position information of the data-management peers. The supernodes are generally selected from peers having high processing performance. The number of supernodes is adjusted so as to occupy a predetermined ratio to the total number of peers. A supernode can be changed to a normal peer, or vice versa. The management range of the supernode is determined by a virtual peer group. Also, each peer can know the position information of the supernode when joining the peer group. A data-management peer 2A belongs to the peer group 3A, and manages the data held by the peers 1A and 1B. A data-management peer 2B belongs to the peer group 3B, and manages the data held by the peers 1E and 1F. A data-management peer 2C belongs to the peer group 3C, and manages the data held by the peers 1H and 1I. Here, in the following explanation, when the data-management peers 2A to 2C are not required to be distinguished from one another, characters "A" to "C" are omitted. Also, when the peers 1A, 1B, 1E, 1F, 1H, and 1I are not required to be distinguished from one another, characters "A", "B", "E", "F", "H", and "I" are omitted. When the peer groups 3A to 3C are not required to be distinguished from one another, characters "A" to "C" are omitted.

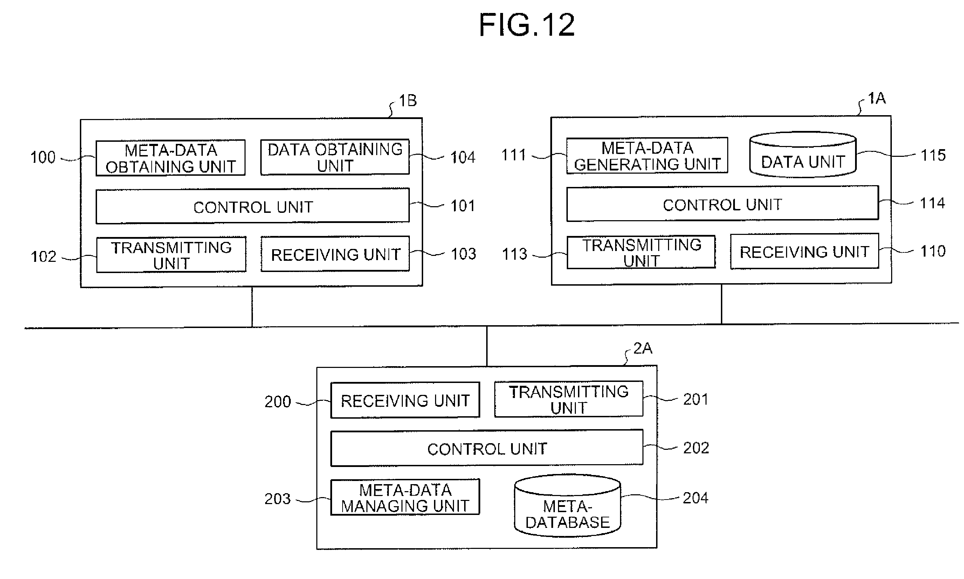

Fig. 12 is a functional block diagram of the data-management peer 2 and the peers 1 of the third embodiment. The configuration of the peers 1A, 1B, 1E, 1F, 1H, and 1I is basically similar to that previously described in the first embodiment, and the same explanation is not repeated. When the data stored in the database 115 is updated by the meta-data generating unit 111, if the data is allowed to be published, the control unit 114 of the peer 1A transmits meta-data updated by the meta-data generating unit 111 to the data-management peer 2 via the transmitting unit 113. Also, the control unit 114 causes the meta-data including the position information of the peer 1A and the data disclosure condition, and the transmitting unit 113 then transmits the meta-data to the data-management peer 2. When the meta-data already transmitted to the data-management peer 2 is deleted, the control unit 114 transmits a delete instruction message for delete instruction to the data-management peer 2 via the transmitting unit 113. In response to this delete instruction message, the meta-data is deleted from the data-management peer 2.

The configuration of the data-management peer 2 is basically similar to that of the data-management server 5, and includes a receiving unit 200, a transmitting unit 201, a control unit 202, a meta-data managing unit 203, and a meta-database 204. Here, the meta-data managing unit 203 receives the meta data from the peer 1A via the receiving unit 200, and causes the meta-data to be stored in the meta-database 204.

Next, a data searching and obtaining process performed by the peer 1 according to the third embodiment is explained. The data searching and obtaining process of the third embodiment is similar to that previously described in connection with Fig. 4. The operation of the data-management peer 2 is similar to that previously described in connection with Fig. 7. It is assumed herein that the peer 1B is a search-requesting peer that requests data search. Part of the process different from that in the first or second embodiment is explained below.

At step S1 in Fig. 4, the peer 1B transmits a search request to the data-management peer 2A. Upon receipt of the search request (Yes at step S21 in Fig. 7), the data-management peer 2A searches for the relevant data by using the meta-data stored in the meta-database 204 in a manner similar to that of the data-management server 5 (step S22). The following process is similar to that previously described in the second embodiment.

Referring back to Fig. 4, at step S3, the peer 1B transmits a meta-data subscription request to the data-management peer 2A. Upon receipt of the meta-data subscription request (Yes at step S26 in Fig. 7), the data-management peer 2A monitors an update state of the meta-data stored in the meta-database 204 for the target data in a manner similar to that of the data-management server 5. The following process is similar to that previously described in the second embodiment.

As explained above, according to the third embodiment, without provision of an data-management server in the P2P network NT3, information can be managed in a centralized manner by selecting a data-management peer having a server function from the peers configuring the P2P network NT3.

The following is a description of a first modification of the above embodiments. In the first embodiment, when meta-data is newly generated, the peer 1A may transmit all attributes represented by the meta-data, or may transmits only the updated attributes. When only the updated attributes are transmitted, for example, the peer 1A causes the meta-data generated by the meta-data generating unit 111 to be stored in an external storage device or the like. Then, when the meta-data generating unit 111 newly generates meta-data, the meta-data managing unit 112 may read meta-data already stored in the external storage device as meta-data representing various attributes of data corresponding to the meta-data, compare the former meta-data with the latter meta-data to specify which attribute included in the meta-data has been updated, and transmit meta-data representing the specified attributed as partial meta-data to the target peer 1 via the transmitting unit 113.

The following is a description of a second modification. In the second embodiment, the meta-data subscription request transmitted from the peer 1 to the data-management server 5 can include information (hereinafter, specifying information) that specifies part of attributes included in the meta-data as a transmission target. This makes it possible to obtain values of the part of attributes included in the meta-data only when any of these values is changed. For example, when the meta-data is configured to be written in the extensible Markup Language (XML), XPath is used to allow the part of attributes included in the meta-data to be specified. In such a configuration, when the meta-data subscription request received by the receiving unit 500 includes specifying information, upon determination that any of the part of attributes specified by the specifying information is updated, the meta-data managing unit 503 of the data-management server 5 determines that meta-data representing the part of attributes (hereinafter, "partial meta-data") is to be transmitted. According to this determination, the transmitting unit 501 transmits to the peer 1A generating meta-data a partial update report request for transmitting the partial meta-data representing the part of attributes at the time of updating the part of attributes.

On the other hand, upon receipt of the partial update report request from the data-management server 5, when any of the part of attributes included in the meta-data specified by the specifying information is updated is association with update of the data stored in the database 115, the peer 1A transmits to the data-management server 5 partial meta-data representing the part of attributes. Upon receipt of the partial data, the data-management server 5 update the partial attribute represented by the partial meta-data for the meta-data stored in the meta-database 504. Then, the data-management server 5 transmits partial meta-data representing part of attributes of the meta-data to the peer transmitting the meta-data subscription request including the specifying information. Here, when transmitting meta-data to the relevant peer for the first time, the data-management server 5 transmits all pieces of data included in the meta-data. Also, when specifying information is not included in the meta-data subscription request, the data-management server 5 performs a process similar to that explained in the above embodiments with all attributes included in the meta-data being taken as a transmission target. When newly generating data, the peer 1 transmits all attributes of the meta-data for that data to the data-management server 5 in a manner similar to that explained in the above embodiments.

With this configuration, when specifying information is included in the meta-data subscription request, it is enough to monitor only the update state of the part of attributes included in the meta-data specified by the specifying information. Also, the peer 1 obtains minimum meta-data required for information management, thereby holding information in the latest state and efficiently managing the information. The data-management server 5 transmits only the portion updated from the part of attributes included in the meta-data, thereby suppressing an increase in communication amount in the P2P network NT2 and suppressing an increase in traffic of the network.

Without using specifying information for the meta-data subscription request, the data-management server 5 can analyze which attribute has been updated from among the attributes included in the meta-data. For example, upon receipt of meta-data from the peer 1A, the data-management server 5 may read the meta-data already stored in the meta-database 504 as meta-data representing various attributes of data corresponding to the meta-data, compare the former meta-data with the latter meta-data to specify which attribute included in the meta-data has been updated, and transmit the specified attribute as partial meta-data to the peer 1.

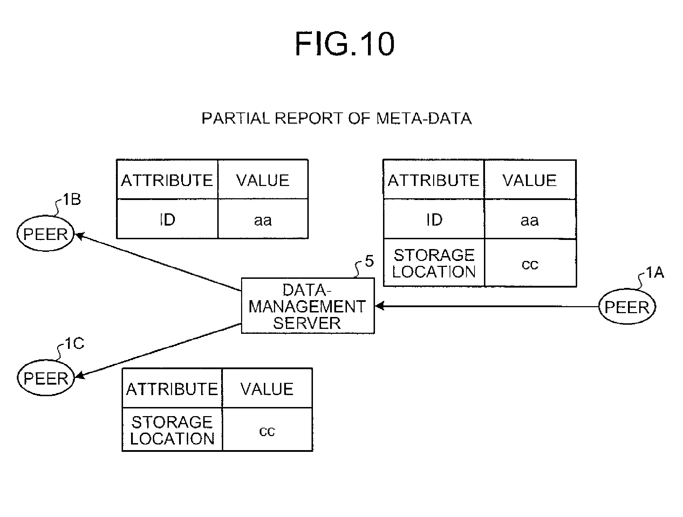

When the receiving unit 500 receives meta-data subscription requests for the same data from a plurality of peers (any two or more of the peers 1B to 1I), the meta-data managing unit 503 of the data-management server 5 may find a sum of part of attributes specified by the specifying information included in each of the meta-data subscription requests and transmit to the peer 1A a partial update report request for transmission of partial meta-data representing attributes that belong to the obtained sum of the part of the data. Fig. 9 is a schematic diagram conceptually depicting a flow of data when meta-data subscription requests each including specifying information for the same data are transmitted from the peers 1B and 1C. Fig. 10 is a schematic diagram conceptually depicting a flow of data when part of attributes included in the meta-data are updated. In Fig. 9, for example, the peer 1B transmits to the data-management server 5 a meta-data subscription request including specifying information that specifies "ID" and "name" as part of attributes included in the meta-data. The peer 1C transmits to the data-management server 5 a meta-data subscription request including specifying information that specifies "name" and "storage location" as part of attributes included in the meta-data. The data-management server 5 obtains "ID", "name", and "storage location" as a sum of attributes specified by the specifying information included in these meta-data subscription requests, and transmits to the peer 1A a partial update report request at the time of update of any of "ID", "name", and "storage location" of the meta-data. On the other hand, in Fig. 10, for example, when the data to be transmitted is updated and "ID" and "storage location" of the meta-data for the data are updated, upon receipt of the partial update report request, the peer 1A transmits "ID" and "storage location" to the data-management server 5 as part of attributes included in the meta-data. Based on the specifying information, the data-management server 5 transmits "ID" to the peer 1B and "storage location" to the peer 1C.

In the above description, one peer (the peer 1A) generates meta data. Alternatively, a plurality of peers (hereinafter, "generating peers") can have a function of generating meta-data. In this case, the data-management server 5 transmits a partial update report request to each of the generating peers. Upon receipt of the partial update report request, when the data stored in the database 115 is updated, each generating peer updates the meta-data for that data. When part of attributes specified by the received partial update report request are updated, the generating peer transmits partial meta-data representing the part of attributes to the data-management server 5. Upon receipt of the partial meta-data, the data-management server 5 transmits the partial meta-data to the target peer

With this configuration, minimum meta-data required for data management is obtained, and thereby data can be efficiently managed.

The following is a description of a third modification. In the first embodiment, as in the second modification, a meta-data subscription request can include specifying information that specifies part of attributes included in the meta-data. In this case, as with the data-management server 5 in the second modification, the peer 1A transmits partial meta-data representing the part of attributes specified by the specifying information to the target peer at the time of updating the attributes.

Also in the third embodiment, the configuration may be such that the peer 1 causes, for transmission, specifying information that specifies part of attributes included in the mete-data to be included in the meta-data subscription request as the transmission target that is to be transmitted to the data-management peer 2. The data-management peer 2 can be configured to be similar to the data-management server 5 in the second modification. With this configuration, when specifying information is included in the meta-data subscription request, it is enough for the data-management peer 2 to monitor only the update state of the part of attributes specified by the specifying information. The data-management peer 2 transmits only the updated portions of the part of attributes included in the meta-data, thereby suppressing an increase in communication amount in the P2P network NT2 and suppressing an increase in network traffic.

In the embodiments explained above, the number of peers connected to the P2P network is cited merely by way of example and without limitation.

As examples of the information managing apparatus, the data-management server 5 is taken in the second embodiment, whilst the data-management peer 2 is taken in the third embodiment. However, the information managing apparatus is not restricted to these.

In the embodiments explained above, to avoid subscription from being effective indefinitely when the peer 1B transmitting the meta-data subscription request abruptly leaves the relevant one of the P2P networks NT1 to NT3, a subscription time limit may be set to the meta-data subscription request. This time limit may be set by the peer 1A. When such a time limit is set, the peer 1B resends a meta-data subscription request at predetermined time intervals to extend the time limit.

In the embodiments explained above, the configuration may be such that, upon receipt of meta-data, the peer 1 transmitting the meta-data subscription request (hereinafter, "subscription-requesting peer") analyzes the meta-data and determines whether data corresponding to the meta-data is obtained. Specifically, for example, the subscription-requesting peer stores the received meta-data in an external storage device or the like and also determines whether meta-data representing various attributes of data corresponding to the meta-data has already been stored in the external storage device before the receipt. When the determination result is negative, the subscription-requesting peer obtains the data corresponding to the meta-data. Also, when the determination result is negative, the subscription-requesting peer compares the received meta-data with the meta-data already stored in the external storage device before receipt and, when determining that at least one attribute as explained above included in the received meta-data has been updated, obtains the data corresponding to the meta-data.

According to an embodiment of the present invention, the present invention, an information processing apparatus can always obtain via a network the latest information from another information processing apparatus. Thus, network load can be reduced.

Although the invention has been described with respect to specific embodiments for a complete and clear disclosure the appended claims are not to be thus limited but are to be construed as embodying all modifications and alternative constructions that may occur to one skilled in the art that fairly fall within the basic teaching herein set forth.

## Claims

1. An information transmitting system including a plurality of information processing apparatuses (1A, 1B, 1C, 1D, 1E, 1F, 1G, 1H, 1I), in which a first information processing apparatus (1A) transmits information to a second information processing apparatus (1B) via a network, the system comprising:
a selecting unit that selects, from the information processing apparatuses, at least one information managing apparatus (5, 2A) that manages meta-data representing attributes of information; and
a position-information transmitting unit that transmits position information of the information managing apparatus to the information processing apparatuses, wherein
the second information processing apparatus (1B) includes
a requesting unit (102) that transmits a request to the information managing apparatus to transmit meta-data representing attributes of information to obtain when the information is updated;
a meta-data receiving unit (103) that receives the meta-data from the information managing apparatus; and
an obtaining unit (104) that obtains the information based on the meta-data,
the information managing apparatus (5, 2A) includes
a meta-data receiving unit (500, 200) that receives the meta-data from the first information processing apparatus (1A);
a storage unit (504, 204) that stores therein the meta-data;
a managing unit (503, 203) that manages the meta-data stored in the storage unit (504, 204);
a request receiving unit (500, 200) that receives the request from the requesting unit (102); and
a meta-data transmitting unit (501, 201) that transmits the meta-data to the second information processing apparatus (1B) when the managing unit (503, 203) determines that the meta-data has been updated, and
the first information processing apparatus (1A) includes
an information storage unit (115) that stores therein the information;
a generating unit (111) that generates, when information is newly stored in the information storage unit (115) or when the information stored in the information storage unit (115) is updated, meta-data of the information; and
a meta-data transmitting unit (113) that transmits the meta-data generated by the generating unit (111) to the information managing apparatus.

2. The information transmitting system according to claim 1, wherein the attributes of the information includes at least one of identifier, name, type, location where the information is stored, size, date and time of creation of the information, date and time of updating the information, use state of the information, creator, administrator, category, keyword, summary, comment, version, revision number, access right, disclosure range, state of the information, compatibility, and reference to related information.

3. An information processing apparatus that transmits information to another information processing apparatus (1B) via a network, the apparatus comprising:
a storage unit (115) that stores therein information to be transmitted to another information processing apparatus (1B);
a request receiving unit (110) that receives a request to transmit meta-data representing attributes of the information when the information is updated;
a generating unit (111) that generates, when information is newly stored in the storage unit (115) or when the information stored in the storage unit (115) is updated, meta-data of the information;
a managing unit that manages the meta-data generated by the generating unit (111); and
a meta-data transmitting unit (113) that transmits the meta-data to the other information processing apparatus (1B) when the managing unit determines that the meta-data has been updated.

4. The information processing apparatus according to claim 3, wherein the meta-data generated by the generating unit (111) includes position information of the information processing apparatus.

5. The information processing apparatus according to claim 3, wherein
the generating unit (111) generates new meta-data of the information correspondingly to updating of the information, and
the managing unit determines that the meta-data has been updated when the generating unit (111) generates the new meta-data.

6. The information processing apparatus according to claim 3, wherein
the generating unit (111) updates the meta-data of the information correspondingly to updating of the information to generate update meta-data,
the managing unit extracts, upon determining that the meta-data has been updated, partial meta-data from the update meta-data, the partial meta-data representing an attribute that has changed due to updating of the meta-data, and
the meta-data transmitting unit (113) transmits the partial meta-data to the other information processing apparatus (1B).

7. The information processing apparatus according to claim 3, wherein
the request includes specifying information that specifies at least one of the attributes of the information, and
the meta-data transmitting unit (113) transmits, when the managing unit determines that part of the meta-data representing the attribute specified by the specifying information has been updated, the part of the meta-data to the other information processing apparatus (1B).

8. The information processing apparatus according to claim 3, further comprising a searching unit that searches for at least one of the information and the meta-data corresponding to the information when a search for the information is requested from the other information processing apparatus (1B).

9. The information processing apparatus according to claim 3, wherein
the meta-data includes disclosure information on disclosure of the information,
the managing unit determines, upon determining that the meta-data has been updated, whether the meta-data is to be transmitted to the other information processing apparatus (1B) based on the disclosure information, and
the meta-data transmitting unit (113) transmits the meta-data to the other information processing apparatus (1B) when the managing unit determines that the meta-data is to be transmitted to the other information processing apparatus (1B).

10. The information processing apparatus according to claim 3, further comprising a disclosure-information storage unit that stores therein disclosure information on disclosure of the information, wherein
the managing unit determines, upon determining that the meta-data has been updated, whether the meta-data is to be transmitted to the other information processing apparatus (1B) based on the disclosure information, and
the meta-data transmitting unit (113) transmits the meta-data to the other information processing apparatus (1B) when the managing unit determines that the meta-data is to be transmitted to the other information processing apparatus (1B) .

11. The information processing apparatus according to claim 3, further comprising a disclosing unit that enables disclosure of the information to allow the other information processing apparatus (1B) that has received the meta-data to obtain the information corresponding to the meta-data.

12. An information managing apparatus that is connected to a network and manages meta-data representing attributes of information to be transmitted from a first information processing apparatus (1A) to a second information processing apparatus (1B), the apparatus comprising:
a meta-data receiving unit (503) that receives the meta-data from the first information processing apparatus (1A);
a storage unit (504, 204) that stores therein the meta-data;
a managing unit (503, 203) that manages the meta-data stored in the storage unit (504, 204);
a request receiving unit (500, 200) that receives from the second information processing apparatus (1B) a request to transmit the meta-data when the information is updated; and
a meta-data transmitting unit (501, 201) that transmits the meta-data to the second information processing apparatus (1B) when the managing unit (503, 203) determines that the meta-data has been updated.

13. The information managing apparatus according to claim 12, wherein
the managing unit (503, 203) determines, when the request includes specifying information that specifies at least one of the attributes of the information and part of the meta-data representing the attribute specified by the specifying information has been updated, to transmit the part of the meta-data to the second information processing apparatus (1B), and
the meta-data transmitting unit (501, 201) transmits the part of the meta-data to the second information processing apparatus (1B).

14. The information managing apparatus according to claim 12, wherein
the managing unit (503, 203) includes
a request generating unit that, when the request receiving unit (500, 200) receives requests each including specifying information that specifies at least one of the attributes of the information from a plurality of information processing apparatuses, obtains a set of attributes specified by the specifying information, and generates a partial meta-data request including second specifying information specifying the set of attributes to request transmission of partial meta-data representing the set of attributes when any one of the attributes is updated; and
a request transmitting unit that transmits the partial meta-data request to the first information processing apparatus (1A), and
the meta-data receiving unit (503) receives the partial meta-data transmitted from the first information processing apparatus (1A) in response to the partial meta-data request.

15. The information managing apparatus according to claim 12, further comprising a searching unit that searches for at least one of the information and the meta-data corresponding to the information when a search for the information is requested from the second information processing apparatus (1B).

16. The information managing apparatus according to claim 12, wherein
the meta-data includes disclosure information on disclosure of the information,
the managing unit (503, 203) determines, upon determining that the meta-data has been updated, whether the meta-data is to be transmitted to the second information processing apparatus (1B) based on the disclosure information, and
the meta-data transmitting unit (501, 201) transmits the meta-data to the second information processing apparatus (1B) when the managing unit (503, 203) determines that the meta-data is to be transmitted to the second information processing apparatus (1B).

17. The information managing apparatus according to claim 12, further comprising a disclosure-information storage unit that stores therein disclosure information on disclosure of the information, wherein
the managing unit (503, 203) determines, upon determining that the meta-data has been updated, whether the meta-data is to be transmitted to the second information processing apparatus (1B) based on the disclosure information, and
the meta-data transmitting unit (501, 201) transmits the meta-data to the second information processing apparatus (1B) when the managing unit (503, 203) determines that the meta-data is to be transmitted to the second information processing apparatus (1B).

18. The information managing apparatus according to claim 12, wherein
the generating unit (111) updates the meta-data of the information correspondingly to updating of the information to generate update meta-data,
the managing unit (503, 203) extracts, upon determining that the meta-data has been updated, partial meta-data from the update meta-data, the partial meta-data representing an attribute that has changed due to updating of the meta-data, and
the meta-data transmitting unit (501, 201) transmits the partial meta-data to the second information processing apparatus (1B).

19. An information transmitting method applied to an information transmitting system including a plurality of information processing apparatuses in which a first information processing apparatus transmits information to a second information processing apparatus via a network, the method comprising:
selecting, from the information processing apparatuses, at least one information managing apparatus that manages meta-data representing attributes of information;
transmitting position information of the information managing apparatus to the information processing apparatuses;
the second information processing apparatus transmitting a request to the information managing apparatus to transmit meta-data representing attributes of information to obtain when the information is updated;
the second information processing apparatus receiving the meta-data from the information managing apparatus;
the second information processing apparatus obtaining the information based on the meta-data;
the information managing apparatus receiving the meta-data from the first information processing apparatus;
the information managing apparatus storing the meta-data in a storage unit;
the information managing apparatus receiving the request from the second information processing apparatus;
the information managing apparatus transmitting the meta-data to the second information processing apparatus when the meta-data has been updated;
the first information processing apparatus storing the information in an information storage unit;
the first information processing apparatus generating, when information is newly stored in the information storage unit or when the information stored in the information storage unit is updated, meta-data of the information; and
the first information processing apparatus transmitting the meta-data generated to the information managing apparatus.
